# DEMANDE DE BREVET EUROPEEN

(11) **EP 0 678 416 A1**
(43) Date de publication de la demande: **25.10.1995**
(21) Numéro de dépôt: 95400585.6
(22) Date de dépôt: 17.03.1995
(51) Int. Cl.: B60N 2/24, B60N 2/14, B60N 2/04

(54) **Poste de pilotage inclinable pour échelle ou bras élévateur**

(30) Priorité: 22.04.1994 FR 9404854
(71) Demandeur: CAMIVA, F-73230 Saint-Alban-Leysse (FR)
(72) Inventeur: Vayssiere, Christophe, F-38920 Crolles (FR); Ducruet, Henri, F-73160 Cognin (FR)
(74) Mandataire: Fernandez, Francis Lionel

(57) **Abrégé**

Poste de pilotage inclinable (5) pour échelle pouvant au moins se dresser ou s'abaisser autour d'un axe sensiblement horizontal (3) sur un châssis, caractérisé en ce qu'il présente un support mobile (8) muni d'au moins deux éléments de guidage (9, 10), engagés respectivement à l'intérieur d'une première glissière (11) et d'une seconde glissière (12) solidaires du châssis (2), de façon à imposer au poste de pilotage (5) un mouvement combiné de translation le long de la première glissière (11), et de rotation autour de l'élément de guidage (9) engagé dans celle-ci.

## Description

La présente invention a pour objet un poste de pilotage inclinable pour une échelle ou un bras élévateur analogue de véhicule d'intervention, pouvant au moins se dresser ou s'abaisser autour d'un axe sensiblement horizontal.

Par la publication DE 2 036 559, on connaît un poste de pilotage d'échelle d'incendie comportant un siège et un pupitre de commande fixés latéralement sur une partie de châssis correspondant à l'axe de relevage de l'échelle. Cette disposition contraint l'utilisateur à incliner fortement la tête vers l'arrière pour observer l'extrémité supérieure de l'échelle, lorsque l'angle de relevage de celle-ci est important.

Pour supprimer l'inconvénient mentionné ci-dessus, la publication FR 2 586 382 propose d'utiliser un siège basculant autour d'un axe transversal solidaire de l'échelle dans la même direction que celle-ci. Grâce au basculement de son siège dans le même sens que l'échelle, l'opérateur a besoin d'incliner dans une moindre mesure la tête vers l'arrière. La solution illustrée par la publication FR 2 586 382 a donc le mérite de réduire les efforts de l'opérateur lorsque l'échelle est relevée. En revanche, cette solution ne lui offre aucun recul pour observer dans les meilleures conditions de confort et de visibilité l'extrémité supérieure de l'échelle, notamment lorsque celle-ci atteint des angles de relevage importants.

La présente invention vise à faciliter l'observation de l'extrémité supérieure de l'échelle par l'opérateur, notamment lorsque l'échelle atteint des angles de relevage importants.

Elle propose à cet effet un poste de pilotage inclinable pour échelle pouvant au moins se dresser ou s'abaisser autour d'un axe sensiblement horizontal sur un châssis. Ce poste présente un support mobile, muni d'au moins deux éléments de guidage, engagés respectivement à l'intérieur d'une première glissière et d'une seconde glissière solidaires du châssis, de façon à imposer au poste de pilotage un mouvement combiné de translation le long de la première glissière et de rotation autour de l'élément de guidage engagé dans celle-ci.

Un autre aspect de l'invention consiste à proposer une liaison mécanique appropriée entre l'échelle et le poste de pilotage.

Le poste de pilotage peut ainsi être retenu par un câble accroché sur un élément solidaire en rotation de l'échelle, de façon à limiter son inclinaison en fonction de celle de l'échelle.

D'autres moyens peuvent être utilisés pour incliner le poste de pilotage, tels que des moyens hydrauliques, pneumatiques ou électriques.

Les conditions dans lesquelles l'opérateur peut accéder à son poste de pilotage ou quitter celui-ci constituent des points importants en matière de confort et de sécurité.

Pour améliorer ces conditions, l'invention prévoit que le poste présente au moins un élément élastique de rappel en position sensiblement horizontale.

Selon un mode de réalisation de l'invention, le châssis mobile supporte un siège.

Selon un mode de réalisation de l'invention, le châssis mobile supporte un pupitre de commande de l'échelle.

Selon un mode de réalisation de l'invention, le câble est accroché par une extrémité sur un levier pivotant autour de l'axe de rotation de l'échelle.

Selon un mode de réalisation de l'invention, le câble est accroché en un point quelconque du support mobile.

Selon un mode de réalisation de l'invention, la première glissière est rectiligne.

Selon un mode de réalisation de l'invention, la première glissière est sensiblement horizontale.

Selon un mode de réalisation de l'invention, la trajectoire du poste de pilotage est déterminée par la forme, la longueur et la position relative des glissières.

D'autres caractéristiques et avantages de l'invention apparaîtront clairement à la lecture de la description suivante d'un mode de réalisation particulier de celle-ci, en liaison avec les dessins annexés sur lesquels :
- la figure 1 représente schématiquement un poste de pilotage d'échelle en position horizontale,
- la figure 2 se rapporte au poste de pilotage de la même échelle en position inclinée.

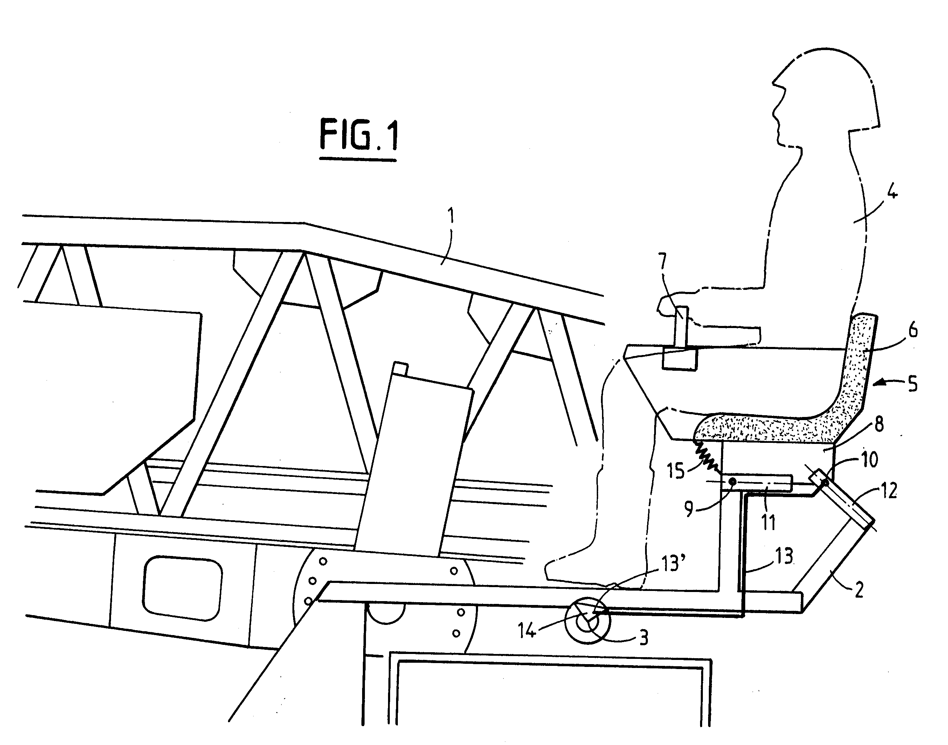

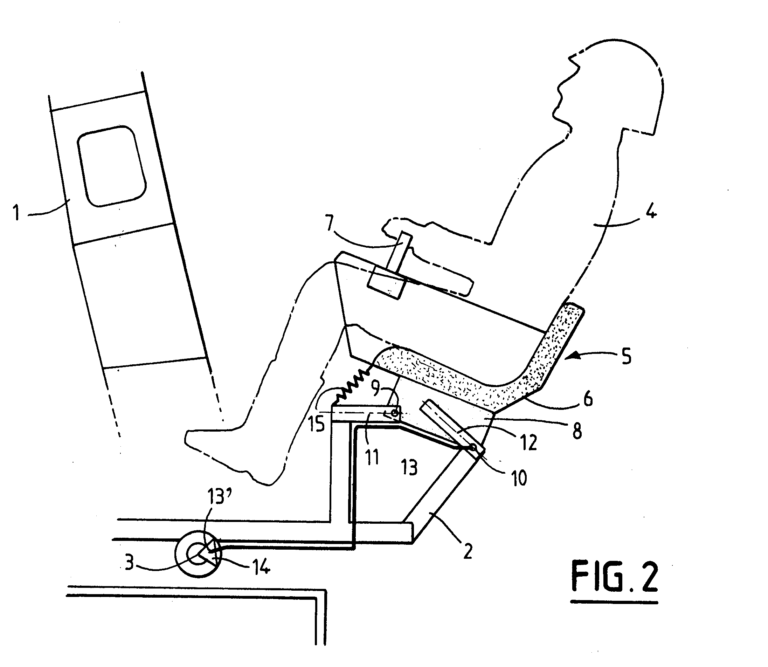

L'échelle 1 dont une partie apparaît sur la figure 1 dispose d'un axe de dressage horizontal 3 sur une partie 2, solidaire du châssis de pivotement d'un véhicule d'intervention de sapeur-pompiers. L'opérateur 4 dispose d'un poste de pilotage 5 de l'échelle 1, comportant notamment un siège 6 et un pupitre de commande 7. Le siège 6 est monté sur un support mobile 8 présentant deux éléments de guidage solidaires de celui-ci, tels que des galets 9, 10 pouvant se déplacer respectivement à l'intérieur d'une première glissière sensiblement horizontale 11, et d'une seconde glissière inclinée 12 solidaires de la partie 2, de façon à entraîner le siège vers le bas et vers l'arrière, comme le montre la figure 2. Sans sortir du cadre de l'invention, on peut cependant prévoir d'autres dispositions de glissières dont la forme la longueur et l'orientation seront choisies de façon à optimiser la trajectoire du support mobile 8 et du siège 6.

Un câble 13 dont une première extrémité 13' est fixée sur une manivelle 14 solidaire en rotation de l'échelle 1 autour de l'axe 3, et dont une seconde extrémité 13'' est fixée en un point quelconque du support mobile 8 par exemple au niveau du galet arrière 10, permet de contrôler le basculement du siège 6, en reliant mécaniquement celui-ci à l'échelle 1. Enfin, les figures 1 et 2 font apparaître un ressort 15 assurant le rappel du siège vers sa position horizontale.

Conformément à l'invention, le déplacement du premier galet 9 dans la première glissière 11 et du second galet 10 dans la seconde glissière 12 permet d'obtenir un recul du siège vers l'arrière simultanément à son pivotement autour du premier galet 9, selon une trajectoire déterminée par l'écart des deux galets 9,10 et l'orientation relative des deux glissières (11, 12), donc d'imposer au poste de pilotage un mouvement combiné de translation le long de la première glissière 11 et de rotation autour du premier galet 9. Le basculement du siège peut être assuré par tout moyen mécanique, hydraulique pneumatique ou électrique placé directement ou non sous le contrôle de l'opérateur.

L'invention propose également d'adapter entre l'échelle 1 et le poste de pilotage 5 une liaison mécanique imposant à ce dernier une position déterminée par l'inclinaison de l'échelle 1.

Ce type de liaison peut par exemple être assuré par un câble 13, mentionné sur les figures 1 et 2. Le câble 13 circule en réalité à l'intérieur d'une gaine (non représentée) arrimée au châssis. Accroché au levier 14 solidaire en rotation de l'échelle, et en un point quelconque du siège 6 ou de son support mobile 8, le câble 13 a une longueur telle qu'il maintient le siège 6 sensiblement horizontal lorsque l'échelle est en position abaissée, tout en autorisant son déplacement sous la poussée de l'opérateur vers l'arrière, dans la limite autorisée par l'élévation de l'échelle et la rotation du levier 14 correspondante, tandis que le ressort de rappel 15 assure le retour automatique du siège en position sensiblement horizontale dès que l'opérateur 4 quitte le siège 6, quelle que soit la positon de l'échelle 1. En d'autres termes, le câble permet de retenir le poste de pilotage 5 de façon à limiter son inclinaison en fonction de celle de l'échelle 1, tout en autorisant son retour à l'horizontale sous l'action du ressort 15.

Le poste de conduite inclinable proposé par l'invention assure de façon simple et parfaitement fiable le déplacement angulaire ainsi que le recul de l'opérateur simultanément au dressage de l'échelle. Grâce à l'invention, l'opérateur peut donc observer l'extrémité supérieure de l'échelle dans les meilleures conditions de confort et de sécurité quelle que soit l'inclinaison de celle-ci. Le système de rappel associé aux moyens de guidage du siège permettent en outre à l'opérateur de s'extirper facilement de son siège en toutes circonstances, et de retrouver toujours ce dernier en position horizontale.

## Revendications

**[1]** Poste de pilotage inclinable (5) pour échelle pouvant au moins se dresser ou s'abaisser autour d'un axe sensiblement horizontal (3) sur un châssis, caractérisé en ce qu'il présente un support mobile (8) muni d'au moins deux éléments de guidage (9, 10), engagés respectivement à l'intérieur d'une première glissière (11) et d'une seconde glissière (12) solidaires du châssis (2), de façon à imposer au poste de pilotage (5) un mouvement combiné de translation le long de la première glissière (11), et de rotation autour de l'élément de guidage (9) engagé dans celle-ci.

**[2]** Poste de pilotage inclinable selon la revendication 1, caractérisé en ce qu'il est retenu par un câble (13) accroché sur un élément (14) solidaire en rotation de l'échelle de façon à limiter son inclinaison en fonction de celle de l'échelle (1).

**[3]** Poste de pilotage inclinable selon la revendication 1, caractérisé en ce qu'il est actionné par des moyens hydrauliques.

**[4]** Poste de pilotage inclinable selon la revendication 1, caractérisé en ce qu'il est actionné par des moyens pneumatiques.

**[5]** Poste de pilotage inclinable selon la revendication 1, caractérisé en ce qu'il est actionné par des moyens électriques.

**[6]** Poste de pilotage inclinable selon l'une quelconque des revendications précédentes, caractérisé en ce qu'il présente au moins un élément élastique de rappel (15) en position horizontale.

**[7]** Poste de pilotage selon l'une quelconque des revendications précédentes, caractérisé en ce que le support mobile (8) supporte un siège (6).

**[8]** Poste de pilotage selon l'une quelconque des revendications précédentes, caractérisé en ce que le support mobile (8) supporte un pupitre de commande (7) de l'échelle (1).

**[9]** Poste de pilotage selon l'une des revendications 2 à 7, caractérisé en ce que le câble (13) est accroché par une première extrémité (13') sur un levier (14) pivotant autour de l'axe de rotation (3) de l'échelle (1).

**[10]** Poste de pilotage selon l'une des revendications 2 à 8, caractérisé en ce que le câble (13) est accroché en un point quelconque du support mobile (8).

**[11]** Poste de pilotage selon l'une quelconque des revendications précédentes, caractérisé en ce que la premère glissière (11) est rectiligne.

[**12**] Poste de pilotage selon l'une quelconque des revendications précédentes, caractérisé en ce que la première glissière (11) est sensiblement horizontale.

**[13]** Poste de pilotage selon l'une des revendications précédentes, caractérisé en ce que sa trajectoire est déterminée par l'écart des deux éléments de guidage (9, 10) et par l'inclinaison des glissières (11, 12).
